# EUROPEAN PATENT SPECIFICATION

(11) **EP 2 409 217 B1**
(45) Date of publication and mention of the grant of the patent: **23.11.2016**
(21) Application number: 10753528.8
(22) Date of filing: 10.03.2010
(51) Int. Cl.: G06F 3/12, B41J 5/30, B41J 29/38, H04N 1/00, H04N 1/21

(54) **IMAGE FORMING APPARATUS, IMAGE FORMING METHOD, AND PROGRAM**
BILDERZEUGUNGSVORRICHTUNG, BILDERZEUGUNGSVERFAHREN UND PROGRAMM
APPAREIL ET PROCÉDÉ DE FORMATION D'IMAGE, ET PROGRAMME

(30) Priority: 18.03.2009 JP 2009067036
(43) Date of publication of application: 25.01.2012
(73) Proprietor: Ricoh Company Ltd., Tokyo 143-8555 (JP)
(72) Inventor: MATSUSHITA, Mitsugu, Tokyo 143-8555 (JP)
(74) Representative: Schwabe - Sandmair - Marx
(86) International application number: PCT/JP2010/054466
(87) International publication number: WO 2010/107036

(56) References cited:
- JP-A- 11 143 670
- JP-A- 2000 330 908
- JP-A- 2004 175 095
- JP-A- 2004 220 260
- JP-A- 2007 159 068
- JP-A- 2008 199 151
- US-A1- 2003 055 876
- US-A1- 2003 234 957
- US-A1- 2008 126 940
- US-A1- 2008 150 952

## Description

### TECHNICAL FIELD

The present invention relates to an image forming apparatus that includes a display function for displaying Web content, and an image forming method and program.

### BACKGROUND ART

In recent years, in multifunction products such as copiers, there is widely used a model which is connectable to the Internet and is provided with a Web browser function in order to browse Web content and this allows display of the Web content on a display unit provided on, for example, an operation panel.

In the multifunction product having the Web browser function, various technologies for printing the Web content displayed by the Web browser function are also proposed. For example, Japanese Patent Application Laid-open No. 2008-3991 discloses a technology for displaying Web content on a device and capable of printing a PDF (Portable Document Format) file contained in the Web content.

In recent years, there is a variety of services using the Web content, and there appears a function capable of receiving various services based on information displayed on a Web browser. The services include booking and purchase of tickets and provision of various coupons or the like. In these cases, printing is performed based on a screen according to the Web content displayed by the Web browser, and a print is taken to a shop or the like, so that an actual service can be received. Moreover, there is also a service of displaying a map including a specified point using the Web browser, and in this case, by taking the printed map with a user, the user can arrive a destination without getting lost.

The Web content is generally described in a markup language such as HTML (Hyper Text Markup Language). However, even if the conventional multifunction products include a function of directly printing data in a page description language such as PCL and a PostScript and in a PDF format, there are not known multifunction products provided with a function of directly printing a Web page based on description in HTML.

An object of the present invention, to solve the problems, is to provide an image forming apparatus, an image forming method, and a program capable of directly printing Web content.

### DISCLOSURE OF INVENTION

According to an aspect of the present invention, there is provided an image forming apparatus capable of acquiring and displaying Web content. The image forming apparatus includes an acquisition unit that acquires Web content; a display control unit that causes the Web content acquired by the acquisition unit to be displayed on a display unit according to display control information based on the Web content; a print-data generating unit that generates, based on the display control information for the Web content, print data for printing the Web content displayed on the display unit by the display control unit in page units for printing; and a printing unit that prints the Web content in page units according to the print data generated by the print-data generating unit.

According to another aspect of the present invention, there is provided an image forming method that includes acquiring Web content: causing the Web content acquired at the acquiring to be displayed on a display unit according to display control information based on the Web content; generating, based on the display control information for the Web content, print data for printing the Web content displayed on the display unit at the causing in page units for printing; and printing the Web content in page units according to the print data generated at the generating.

According to the present invention, Web content is caused to be displayed on a display unit according to the display control information based on the Web content, print data for printing the Web content displayed on the display unit in page units for printing is generated based on the display control information for the Web content, and the Web content is printed in page units according to the generated print data, and thus, the present invention has an effect capable of directly printing the Web content.

### BRIEF DESCRIPTION OF DRAWINGS

Fig. 1 is a functional block diagram for explaining a function as an example of an image forming apparatus capable of being applied to embodiments and modifications according to the present invention.
Fig. 2 is a schematic diagram representing one configuration of an operation panel.
Fig. 3 is a flowchart of one example schematically representing a printing process of Web content according to the present invention.
Fig. 4 is a flowchart of one example representing a printing process of Web content according to a first embodiment.
Fig. 5 is a schematic illustrating how Web content is displayed on a display panel of the operation panel.
Fig. 6 is a schematic illustrating an example in which Web content is displayed in one area of a frame longitudinally divided into two areas on the display panel and a print instruction page is displayed on the other area.
Fig. 7 is a schematic illustrating an example in which a link to call up a program by CGI is embedded in Web content.
Fig. 8 is a schematic illustrating an example of a setup menu screen used to set print conditions of Web content displayed on the display panel.
Fig. 9 is a schematic illustrating an example of displaying a print start button used to give a print start instruction to the setup menu screen.
Fig. 10 is a flowchart of one example representing a printing process of Web content according to a second embodiment.
Fig. 11 is a block diagram representing a hardware configuration as one example of the image forming apparatus capable of being commonly applied to the embodiments and the modifications according to the present invention.

### BEST MODE(S) FOR CARRYING OUT THE INVENTION

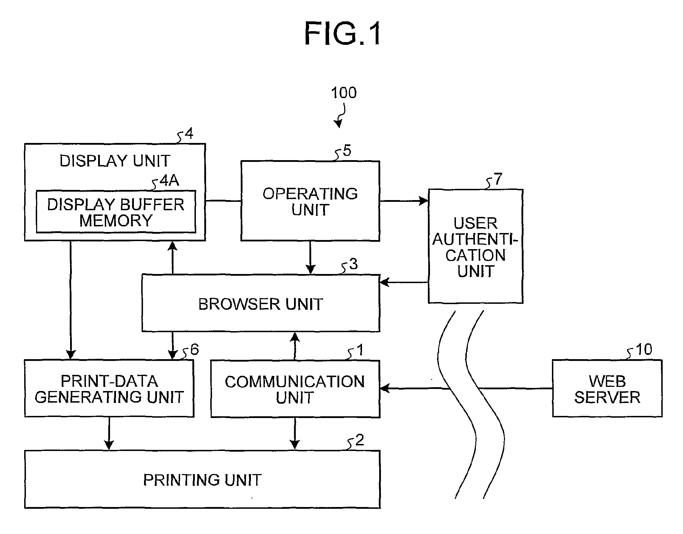

Exemplary embodiments of the image forming apparatus according to the present invention will be explained in detail below with reference to the accompanying drawings. Fig. 1 is a functional block diagram for explaining a function as an example of an image forming apparatus 100 capable of being applied to the embodiments and modifications according to the present invention.

### <Configuration Common to Embodiments>

In Fig. 1, the image forming apparatus 100 includes a communication unit 1, a printing unit 2, a browser unit 3, a display unit 4, an operating unit 5, and a user authentication unit 7. The communication unit 1 performs communication with an external computer through a network. For example, the communication unit 1 performs communication with a Web server 10 through a network and can acquire Web content such as a Web page. A network to which the communication unit 1 is communicable is not limited to the Internet, but may be an intranet using LAN (Local Area Network) or the like.

The communication unit 1 includes a function of switching an output destination of data to another according to a type of the data supplied. For example, the communication unit 1, if the supplied data is data for Web content described in HTML (Hyper Text Markup Language) or the like, outputs the data to the browser unit 3. Further, the communication unit 1, if the supplied data is print data that the printing unit 2 can support, outputs the data to the printing unit 2.

The printing unit 2 performs printing according to the print data and forms an image on a paper based on the print data. For example, the printing unit 2 supports a page description language (PDL: Page Description Language) such as PCL (Printer Control Language) and PostScript, and also supports PDF (Portable Document Format) being a file format based on the PostScript. For example, when print data described in the page description language or a PDF file transmitted from an ordinary computer is received by the communication unit 1 and is supplied to the printing unit 2, the printing unit 2 generates a print image according to the received page description language or PDF file, and executes printing on the paper. Further, the printing unit 2 controls a page layout of the print image on the paper to be printed and performs predetermined image processes such as error diffusion, gamma conversion, a gradation process, and a color process, according to print conditions in accordance with an operation to the operating unit 5 explained later.

The browser unit 3 outputs display control information for causing Web content to be displayed based on the Web content described using HTML or the like. For example, the browser unit 3 controls the communication unit 1 in response to an operation to the operating unit 5, to acquire Web content from the Web server 10. The browser unit 3 performs rendering on the acquired Web content based on the display control information described in HTML, and generates bitmap data. The bitmap data is supplied to the display unit 4 and is used to control a display on a display device. Moreover, the browser unit 3 can supply the HTML data describing the Web content to a print-data generating unit 6 explained later.

Further, the browser unit 3 can output a print instruction to the print-data generating unit 6 according to a user operation to the operating unit 5. Moreover, the browser unit 3 can output various setting instructions such as color mode setting, print layout setting, enlarge/reduce setting, and print side setting, to the printing unit 2 through the print-data generating unit 6 according to the user operation to the operating unit 5. Furthermore, the browser unit 3 can generate bitmap data for displaying a menu screen on the display unit 4 in order to output a setting instruction to the printing unit 2.

The display unit 4 includes a display buffer memory 4A and also includes a display control unit and a display device which are not shown, and performs a display on the display device based on the bitmap data supplied from the browser unit 3. As the display device, an LCD (liquid crystal display) or the like can be used. For example, the bitmap data supplied from the browser unit 3 to the display unit 4 is stored in the display buffer memory 4A. The display control unit reads the bitmap data corresponding to an effective display area of the display device from the display buffer memory 4A, and drives the display device based on the bitmap data, to thereby control the display on the display device, so that, for example, Web content is displayed thereon.

The operating unit 5 is provided with a plurality of operators for accepting a user operation. The operating unit 5 generates a control signal corresponding to the user operation to these operators, and supplies the generated control signal to the browser unit 3. The operators provided in the operating unit 5 may be formed with hardware keys or may be formed with a touch panel in which it is integrally configured with the display device of the display unit 4 and the display on the display device is visible and in which a control signal corresponding to a position pressed is output. It goes without saying that the operators formed with the hardware keys and the operators formed with the touch panel may be used in combination with each other.

The operating unit 5 and the display unit 4 are configured as an operation panel for use by the user to operate the image forming apparatus 100.

The print-data generating unit 6 generates print data for printing Web content in page units for printing based on the display control information for the Web content acquired by the browser unit 3. For example, the print-data generating unit 6 interprets the display control information for the Web content described in HTML or the like supplied from the browser unit 3, and converts the display control information into, for example, the page description language that the printing unit 2 can support, to generate print data. Further, the print-data generating unit 6 converts bitmap data, which is read from the display buffer memory 4A of the display unit 4 and supplied thereto and which is used to control the display on the display device of the display unit 4, into, for example, data described in the page description language which can be printed by the printing unit 2, to generate print data.

These data generated by the print-data generating unit 6 are supplied to the printing unit 2, where printing is executed.

The user authentication unit 7 performs user authentication in response to a user authentication operation to the operating unit 5, and determines whether a predetermined function in the image forming apparatus 100 is permitted to be used. For example, the user authentication unit 7 executes the authentication process to determine whether the use of a printing function of Web content by the browser unit 3 is permitted or not. A method for user authentication is not particularly limited, and thus, entry of password and card authentication performed by a card reader provided in the operating unit 5 can be used.

The user authentication unit 7 checks information entered through the user authentication operation against user information previously registered in a user-information storage unit (not shown), to determine the permission or the non-permission. The result of determination is supplied to the browser unit 3. For example, when the printing function of the Web content is to be used, the user authentication operation is performed through the operating unit 5. The user authentication unit 7, only when authentication is allowed based on the result of the user authentication operation, outputs a print instruction to the print-data generating unit 6 and permits the printing of the Web content using the printing unit 2.

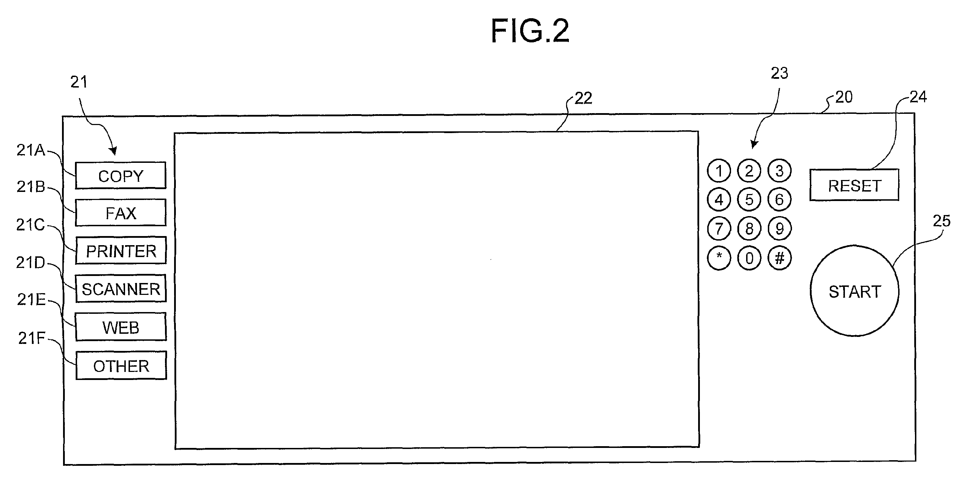

Fig. 2 represents a configuration as one example of an operation panel 20 constituting the display unit 4 and the operating unit 5. In the example of Fig. 2, as hardware keys, a function-selection switch group 21, a data-entry switch group 23, a reset button 24, and a start button 25 are arranged on the operation panel 20.

The function-selection switch group 21 is a switch group for selecting a function of the image forming apparatus 100, including a switch 21A, a switch 21B, a switch 21C, and a switch 21D, by which a copy function, a facsimile function, a printer function, and a scanner function are selected respectively. Moreover, a display and printing function of Web content is selected by a switch 21E. A switch 21F includes other functions, and, is used to select, for example, a screen display such as a setup menu.

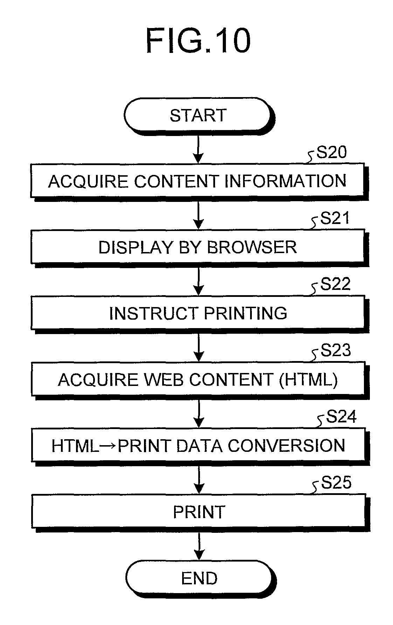

The data-entry switch group 23 is a switch group for entering data, and, in the example of Fig. 2, 10 numeric keys of "0" to "9" and symbol keys of "*" and "#" are arranged. The reset button 24 is used to reset a predetermined setting having been performed to the operation panel 20. The start button 25 is a button is used for receiving an instruction to start printing by the printing unit 2.

Furthermore, a display panel 22 is provided in the operation panel 20. The display panel 22 is a touch panel in which a display device and a touch pad for outputting a control signal according to a pressed position are integrally configured. A combination of a display on the display panel 22 and a control signal according to the pressed position is switched according to the display on the display panel 22, and this enables various functions to be achieved.

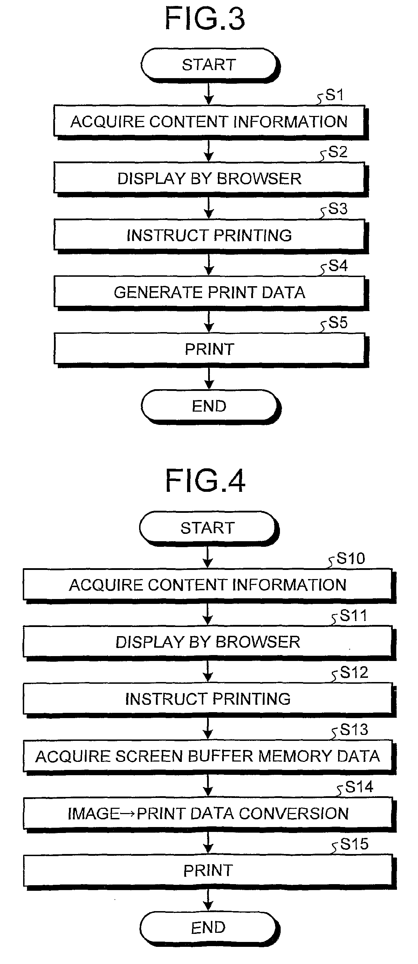

Fig. 3 is a flowchart of one example schematically representing a printing process of Web content according to the present invention. The browser unit 3 controls the communication unit 1 in response to the operation to the operating unit 5 and acquires Web content from the Web server 10 (Step S1). At next Step S2, the Web content is displayed on the display unit 4 under the control according to the display control information based on the Web content acquired by the browser unit 3. When the operating unit 5 receives the print instruction of the Web content (Step S3), the print-data generating unit 6 generates print data for performing the printing in page units based on the display control information according to the Web content (Step S4). The print data is supplied to the printing unit 2, where it is printed on the paper (Step S5). Because the print data is generated based on the display control information for causing the Web content to be displayed, the Web content displayed on the screen can be printed in page units.

### <First Embodiment>

Next, a first embodiment of the present invention is explained. In the first embodiment, the print-data generating unit 6 uses the bitmap data stored in the display buffer memory 4A of the display unit 4, as the display control information for generating print data. Fig. 4 is a flowchart of one example representing a printing process of Web content according to the first embodiment.

The browser unit 3, for example, when the switch 21E of the operation panel 20 (operating unit 5) is operated and the display and printing function of Web content is selected, controls the communication unit 1 and acquires the Web content from the Web server 10 (Step S10). The Web browser unit 3 interprets the acquired Web content and performs rendering, and generates bitmap data. The bitmap data generated at this time is equivalent to, for example, one page of the Web content. The generated bitmap data is supplied to the display unit 4, and is stored in the display buffer memory 4A.

Here, a page in the Web content is a range defined by a start tag (<html>) and an end tag (</html>) of the HTML data describing the Web content, and has a size corresponding to at least a display area of the display unit 4 (hereinafter, called Web-content display area) for causing the Web content to be displayed. Generally, there is no direct connection among a page of Web content, a display size of the display unit 4, and a page in printing. Therefore, there occurs a case where the size of the page of Web content is larger than the Web-content display area or a printing area on a paper sheet.

In this case, of the bitmap data stored in the display buffer memory 4A, bitmap data in an area corresponding to the Web-content display area is read and the read data is displayed on the display device. By moving an area to be read from the Web-content display area, a portion of the Web content that extends out of the display area of the display unit 4 can be displayed.

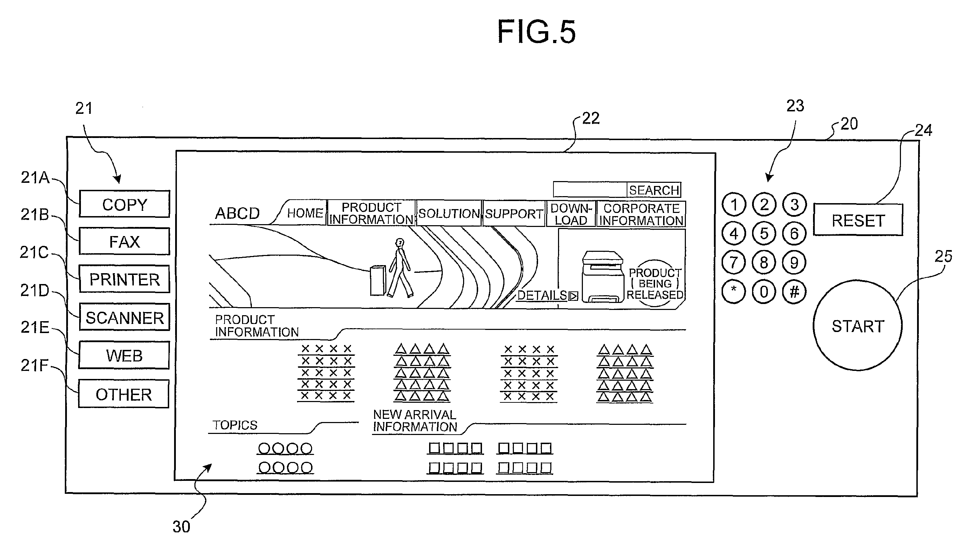

At the next Step S11, the display unit 4 controls the drive of the display device based on the bitmap data stored in the display buffer memory 4A, and displays the Web content on the display device. Fig. 5 illustrates how Web content 30 is displayed on the display panel 22 of the display unit 4 (operation panel 20). Objects are laid out according to the HTML data describing the Web content 30, and the Web content 30 is displayed.

Here, if the page of the Web content 30 to be displayed is larger than the Web-content display area, there may be some of the Web content that extends out of the Web-content display area of the display panel 22. At this time, by operating a scroll operator (not shown) provided in the operation panel 20, the area where bitmap data is read from the display buffer memory 4A is moved, so that the portion of the Web content that extends out of the display panel 22 can be displayed on the display panel 22.

When the Web content displayed by the display unit 4 is desired to be printed by the printing unit 2, the user operates the start button 25 (Step S12). More specifically, the function of the start button 25, when the switch 21E of the operation panel 20 is operated and the display and printing function of the Web content is selected, is switched to a function of instructing printing of the Web content by the printing unit 2. When the start button 25 is operated, the print instruction of the Web content displayed by the display unit 4 is transmitted from the browser unit 3 to the print-data generating unit 6.

Upon the print instruction, the user authentication can be performed by the user authentication unit 7. For example, when the start button 25 is operated in a state in which the display and printing function of the Web content is selected, the browser unit 3 performs a display on the display unit 4 so as to prompt the user to perform a user authentication operation, and ask for the user to enter user's password, for example. The user authentication unit 7 receives the entered password from the browser unit 3, checks the password against a password for each user registered in a user information storage unit (not shown), performs an authentication process, determines whether the printing function of the Web content is permitted or not permitted, and transmits the result of determination to the browser unit 3.

The browser unit 3, if the result of determination indicates that the printing function of the Web content is permitted to be used, instructs the print-data generating unit 6 to perform processes after Step S13 explained later and print the Web content using the printing unit 2. Meanwhile, if the result of determination indicates that the printing function of the Web content is not permitted to be used, the processes after Step S13 are not performed, but the Web content is only displayed on the display unit 4. By performing user authentication, the user who can execute printing of the Web content can be limited, which can also meet demands for security.

The print-data generating unit 6, when receiving the print instruction from the browser unit 3, acquires bitmap data stored in the display buffer memory 4A from the display unit 4 (Step S13). At this time, the print-data generating unit 6 acquires the bitmap data from an area corresponding to the Web-content display area in the display buffer memory 4A.

It should be noted that the bitmap data acquired by the print-data generating unit 6 from the display buffer memory 4A is not limited to these acquired from the area corresponding to the Web-content display area. For example, the print-data generating unit 6 may acquire all the bitmap data of the Web content stored in the display buffer memory 4A. Thus, even if the size of the page based on the Web content is larger than the size of the Web-content display area in the display unit 4, the whole page based on the Web content can be printed.

The print-data generating unit 6, when acquiring the bitmap data from the display buffer memory 4A, generates print data for printing the Web content in page units, at Step S14, based on the acquired bitmap data. More specifically, the print-data generating unit 6 generates the page description language based on the bitmap data acquired from the display buffer memory 4A, and converts the bitmap data to print data. The print data generated by the print-data generating unit 6 is output to the printing unit 2, and the printing unit 2 performs printing on the paper based on the print data (Step S15).

As explained above, the first embodiment of the present invention is configured to acquire the bitmap data stored in the display buffer memory 4A to be used for a display on the display panel 22 and generate the print data for printing in page units based on the bitmap data. Therefore, it is possible to print the Web content in a displayed image displayed on the screen.

Furthermore, in the first embodiment of the present invention, the print data is generated based on the bitmap data stored in the display buffer memory 4A used for a display on the display unit 4, and thus a system of printing the Web content can be easily realized.

### <First Modification>

Next, a first modification of the first embodiment of present invention is explained below. In the first embodiment, the print instruction of the Web content is implemented by operating the start button 25 provided as the hardware key on the operation panel 20. In the first modification, the Web-content display area on the display panel 22 is divided into two areas, a print instruction button for instruction of printing is arranged in one area of the divided areas, and Web content is arranged in the other area. By operating the print instruction button arranged in the one area, a print instruction is output from the browser unit 3 to the print-data generating unit 6.

As this type of method for dividing the Web-content display area into plurals, a frame defined in HTML is known. An example of print instruction using the frame is explained below.

For example, a print instruction page in which a button for instruction of printing is arranged and a frame set (<frameset>) in which a method of dividing the frame is defined are previously created and are stored in a ROM (not shown) or the like. The button arranged in the print instruction page is described in a language in which the operation of the browser unit 3 can be interrupted, and is embedded in the HTML data. The print instruction page is displayed in one of the divided areas and the Web content is displayed in the other area.

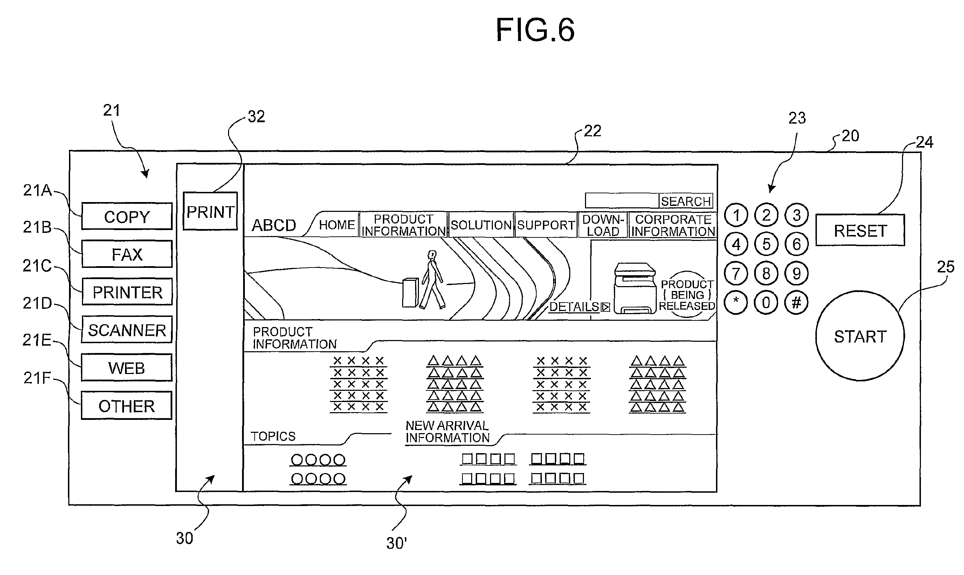

Fig. 6 is an example in which Web content 30' is displayed in one area of a frame longitudinally divided into two areas and a print instruction page 31 is displayed in the other area of the display panel 22. A print instruction button 32 is arranged in the print instruction page 31. It goes without saying that the method of dividing the frame is not limited to the longitudinal division, and thus the frame may be laterally divided. Moreover, a positional relationship between the print instruction page 31 and the Web content 30' is not also limited to the example of Fig. 6. Furthermore, in Fig. 6, the display area on the display panel 22 is divided into two areas, however, this is not limited to the example, and thus, the display area may be divided into further more areas.

At Step S12 in the flowchart of Fig. 4, when wanting to print the Web content 30' displayed in the other area of the divided areas by the printing unit 2, the user operates the print instruction button 32 arranged in the print instruction page 31 displayed in the one area of the divided areas.

It should be noted that the operation of the button or the like displayed on the display panel 22 is implemented by pressing or touching a displayed position of, for example, the button 32 with user's finger. The operating unit 5 sends information indicating the pressed or touched position to the browser unit 3. The browser unit 3 can determine which of the buttons is operated based on the coordinates of the button or the like displayed on the display panel 22 by the display unit 4 and the position information sent from the operating unit 5.

When the print instruction button 32 is operated, a print instruction of the Web content 30' displayed in the other area of the divided areas is transmitted from the browser unit 3 to the print-data generating unit 6. The print-data generating unit 6 reads the bitmap data corresponding to the display area of the Web content 30' from the display buffer memory 4A of the display unit 4, generates print data, and causes the printing unit 2 to print it.

Without being limited to the above, the print-data generating unit 6 may acquire all the bitmap data based on the Web content stored in the display buffer memory 4A of the display unit 4 to generate print data. Moreover, the print-data generating unit 6 may acquire bitmap data corresponding to the Web-content display area from the display buffer memory 4A to generate print data.

As explained above, in the first modification, the print instruction button 32 for instructing printing of the Web content is displayed on the display panel 22 together with the Web content, and thus, the user can easily find out how to instruct the start of printing the Web content.

### <Second Modification>

Next, a second modification of the first embodiment of the present invention is explained. In the second modification, the print instruction of Web content is performed by an operation for the Web content, a program on the image forming apparatus 100 side is called up in response to the operation, and printing of the Web content is executed.

As a specification in which the Web server calls up an external program in response to the operation for the Web content and executes the program, there is known CGI (Common Gateway Interface). There is also known Local CGI in which a virtual Web server is configured on a browser side that displays Web content and the virtual Web server is used to allow use of the CGI on the browser side. In the second modification, the Local CGI is used to execute printing of the Web content.

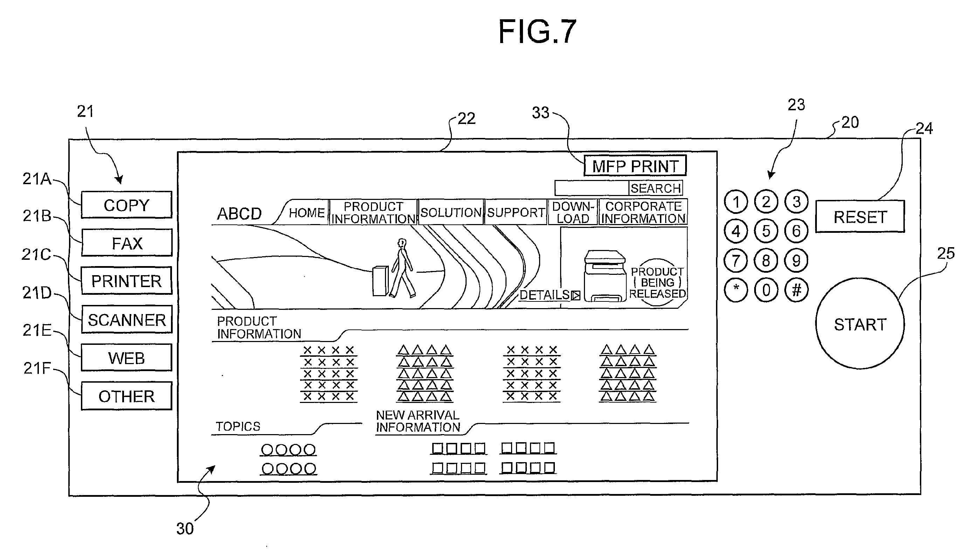

In the second modification, in the browser unit 3, the virtual Web server is configured, so that a command by the Local CGI is ready to be interpreted, and the function of the print-data generating unit 6 can be called up using the command. Meanwhile, on the Web content side, a link to call up a program by the Local CGI is created. Fig. 7 illustrates an example in which a link to call up the program by CGI is embedded in the Web content 30. In the example of Fig. 7, the link is displayed as an MFP print button 33.

At Step S12 in the flowchart of Fig. 4, when wanting to print the Web content 30 by the printing unit 2, the user operates the MFP print button 33 displayed on the Web content 30. When the MFP print button 33 is operated, the browser unit 3 calls up the program for sending a print instruction to the print-data generating unit 6 and executes it. The print-data generating unit 6 reads the bitmap data from the display buffer memory 4A of the display unit 4 in response to the print instruction sent by the program, generates print data, and causes the printing unit 2 to print it.

As explained above, in the second modification, the MFP print button 33 for instructing the start of printing the Web content is embedded in the Web content 30, and thus, the display area of the display panel 22 can be effectively used for display of the Web content.

### <Third Modification>

Next, a third modification of the first embodiment of the present invention is explained. The first embodiment and the first and the second modifications have explained that the print-data generating unit 6 generates the print data using the bitmap data, of the size as it is, acquired from the display buffer memory 4A, however, this is not limited to the example. More specifically, in the third modification, the size of a print image based on the bitmap data is automatically adjusted through its enlargement/reduction based on the size or the like of a paper as a printing object, and print data is generated.

As one example, the print-data generating unit 6 acquires all the bitmap data based on the Web content stored in the display buffer memory 4A of the display unit 4. Then, the print-data generating unit 6 adjusts the print size of the Web content so that the Web content can be fitted in the paper based on the size of the acquired bitmap data, the size of the paper as a printing object, and print resolution. At this time, for example, there is provided a restriction to a reduction percentage of the print size, and if the reduction percentage, when the print size is adjusted so that the Web content is fitted in the paper, exceeds the restriction, printing can be performed by separating pages.

As another example, the print-data generating unit 6 can adjust the print size to fit the width of the Web content. For example, the print-data generating unit 6 adjusts the print size of the Web content so that a lateral width of the Web content is fitted in the paper based on the size of the bitmap data acquired from the display buffer memory 4A, the size of the paper as the printing object, and the print resolution.

There are many Web contents which are not designed in consideration of printing, and thus, when Web content is printed on a paper of a predetermined size, there may occur a case where some of the Web content extends out of a printable area. In the third modification, because the print size of the Web content is automatically adjusted to fit the paper size, the Web content can be printed in an appropriate size.

### <Fourth Modification>

Next, a fourth modification of the first embodiment of the present invention is explained. In the first embodiment and the first to the third modifications, the browser unit 3 directly transmits the print instruction to the print-data generating unit 6 in response to the operation of the start of printing to the operation panel 20. This is not limited to the example, and thus, the fourth modification is configured to set print conditions upon start of printing by the printing unit 2.

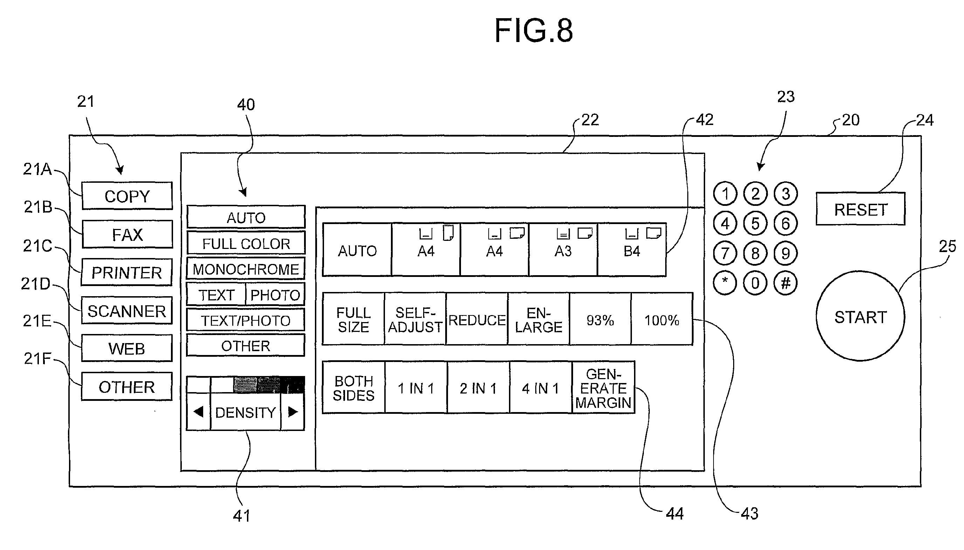

Fig. 8 illustrates an example of a setup menu screen used to set print conditions of Web content displayed on the display panel 22. In Fig. 8, a button group 40 is used to set a print mode upon printing. The print mode can be set from those, in an example of Fig. 8, such as "auto" (automatic setting), "full color", "monochrome", "text", "photo", "text/photo", and "other".

The "auto" is used to automatically set the print mode based on data to be printed. The "full color" is used to perform printing according to, for example, color information for data to be printed. The "monochrome" is used to perform printing based on, for example, brightness information for data to be printed. The "text" is a mode suitable for printing of, for example, text and is used to perform printing in two tones. The "photo" is a mode suitable for printing of photo images or the like, and is used to perform printing in multiple tone. The "text/photo" is set when there is a mixture of an area in which two-tone printing is suitable for one image and an area in which multiple tone is suitable. The "other" has to be set if none of the above applies.

A density controller 41 is used to control density upon printing. A paper selector 42 is used to select a paper to be printed and orientation of the paper.

An enlargement/reduction percentage setting portion 43 is used to set an enlargement/reduction percentage upon printing. Shown in the example of Fig. 8 are, from the left, "full size", "self-adjust", "reduce", "enlarge", "data entry (described as 93%)", and "100%". It should be noted that "93%" is an example of the enlargement percentage directly entered through a data entry key provided on the operation panel 20. The "full size" is used to perform printing according to a resolution of data as a printed object. The "self-adjust" is used to perform printing by enlarging/reducing data as a printed object using, for example, the third modification. The "reduce" and "enlarge" are used to perform printing by enlarging/reducing data as a printed object at a fixed enlargement percentage. Moreover, an enlargement/reduction percentage can be directly set through the data entry key or the like. By operating "100%" in the far right, the "self-adjust" specified as automatic adjustment and the enlargement/reduction percentage set by the "reduce", "enlarge", and "data entry" respectively can be reset.

A layout setting portion 44 is used to set a layout of a page for printing on a paper sheet. Shown in the example of Fig. 8 are, from the left, "both sides", "1 in 1", "2 in 1", "4 in 1", and "generate margin". The "both sides" is used to print one page each on both sides of a paper. The "1 in 1" is used to print one page for printing on one side of a paper. The "2 in 1" and the "4 in 1" are used to print two pages and four pages for printing on one side of a paper, respectively. The "generate margin" is used to set a margin for a layout of a page for printing on a paper.

For example, the browser unit 3, when the start of printing is operated to the operation panel 20 in a state in which Web content is displayed on the display panel 22, causes the setup menu screen exemplified in Fig. 8 to be displayed on the display panel 22. If a predetermined instruction, for example, the start of printing is again operated to the operation panel 20 after desired print conditions are set by a user operation according to the setup menu screen, the browser unit 3 transmits the set print conditions and the print instruction to the print-data generating unit 6.

The print-data generating unit 6, when receiving the print instruction, generates print data based on the bitmap data acquired from the display buffer memory 4A, and transmits the generated print data to the printing unit 2 together with the print conditions received from the browser unit 3. The printing unit 2, when receiving the print data and the print conditions from the print-data generating unit 6, generates a print image based on the print data, subjects the generated print image to layout control and image processing according to the print conditions, and prints the print image on the paper.

As explained above, in the fourth modification, because the print conditions can be set upon printing of the Web content, it is possible to execute printing with more rich functionality.

It should be noted that, here, the setup menu for setting print conditions is displayed using a nearly entire surface of the display panel 22, however, this is not limited to the example. For example, the frame function explained in the first modification can also be used to cause the setup menu to be displayed on one of the divided areas and the Web content to be displayed on the other area. This case allows the user to view the setup menu and the Web content at a time, and thus the setting of the print conditions can be implemented more easily.

### <Fifth Modification>

The first embodiment and the first to the fourth modifications have explained that the Web-content printing function for generating the print data based on the Web content is previously provided in the image forming apparatus 100, however, this is not limited to the example. More specifically, the Web-content printing function can be configured as so-called plug-in which is used by being stored afterward in a program that controls a basic operation of the image forming apparatus 100.

For example, the print-data generating unit 6 can be configured as plug-in. In this case, if the plug-in is not installed on the image forming apparatus 100, the Web content cannot be printed. When the plug-in is installed on the image forming apparatus 100 to be ready to be used, then the printing function of the Web content can be used.

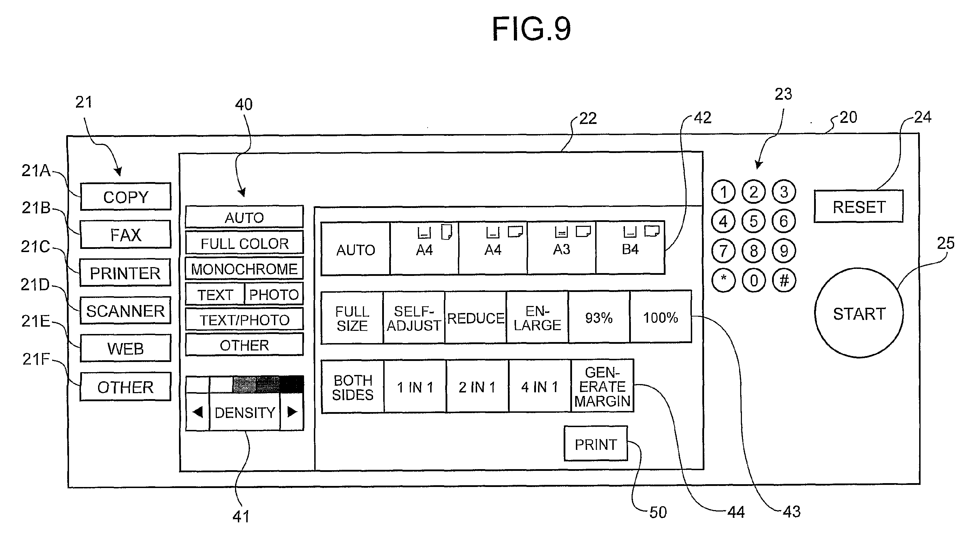

When the print-data generating unit 6 is configured as the plug-in, by installing the plug-in on the image forming apparatus 100, the browser unit 3 causes the setup menu screen as explained with reference to Fig. 8 to be displayed. Moreover, the setup menu screen can be displayed, and, as exemplified in Fig. 9, it can be configured that the browser unit 3 causes a print start button 50 for receiving an instruction to start printing to be displayed on the setup menu screen. It should be noted that the setup menu screen displayed upon installation of the plug-in is not limited to the menu screen for setting the print conditions as exemplified in Fig. 9, and thus, it may be a menu screen capable of further more settings containing, for example, a predetermined item specific to printing of the Web content.

When the user operates the print start button 50, the print conditions and the print instruction set through the setup menu screen is transmitted to the print-data generating unit 6 installed as the plug-in. The print-data generating unit 6, when receiving the print conditions and the print instruction, controls the image processing and layout according to the print conditions, and generates print data. The print data is transmitted to the printing unit 2, where it is printed on the paper.

As explained above, by configuring the printing function of the Web content as a plug-in system, the user can select whether the printing function of Web content is incorporated in the image forming apparatus 100. Moreover, this system allows a charging for the use of the printing function of Web content.

Furthermore, the print start button 50 used to instruct to start printing of Web content is displayed by installing the plug-in of the Web-content printing function, and thus, any unnecessary button is not displayed if the plug-in is not installed.

### <Second Embodiment>

Next, a second embodiment of the present invention is explained. In the first embodiment, the Web content is printed by using the bitmap data stored in the display buffer memory 4A in order to be used for a display of the Web content by the display unit 4. In the second embodiment, print data is directly generated from HTML data describing the Web content.

Fig. 10 is a flowchart of one example representing a printing process of Web content according to the second embodiment. The browser unit 3, for example, when the switch 21E of the operation panel 20 is operated and the display and printing function of Web content is selected, controls the communication unit 1 and acquires the Web content from the Web server 10 (Step S20). The Web browser unit 3 interprets the acquired Web content and performs rendering, and generates bitmap data. The generated bitmap data is supplied to the display unit 4, and is stored in the display buffer memory 4A.

At the next Step S21, the display unit 4 controls the drive of the display device based on the bitmap data stored in the display buffer memory 4A, and, as shown in Fig. 5, displays the Web content on the display device.

When wanting to start printing the Web content displayed by the display unit 4, by the printing unit 2, the user operates, for example, the start button 25 (Step S22). When the start of printing is instructed, the print instruction of the Web content acquired at Step S20 is transmitted from the browser unit 3 to the print-data generating unit 6. At this time, as explained above, the user authentication may be performed by the user authentication unit 7.

The print-data generating unit 6, when receiving the print instruction from the browser unit 3, acquires HTML data describing the Web content acquired at Step S20, from the browser unit 3 (Step S23). The HTML data is display control information for controlling the display of the Web content, and is composed of layout information indicating arrangement of objects in the Web content, and the like.

At Step S24, the print-data generating unit 6 interprets the HTML data acquired from the browser unit 3, and generates print data for printing the Web content described in the HTML data in page units. For example, the print-data generating unit 6 interprets the HTML data acquired from the browser unit 3, and generates a layout of the objects in the Web content. Further, the print-data generating unit 6 generates the page description language for printing the Web content in page units based on the generated layout, and converts the HTML data to print data. As a method of converting the HTML data to the print data, a known technology of converting HTML to PDF (Portable Document Format) can be used.

The print data generated by the print-data generating unit 6 is output to the printing unit 2, and the printing unit 2 performs printing on the paper based on the print data (Step S25).

As described above, in the second embodiment, the HTML data is not converted to the bitmap data but is directly converted to the print data, and thus, it is possible to obtain print quality with higher accuracy.

The second embodiment is common to the first embodiment except for the method of generating the print data based on the Web content by the print-data generating unit 6. Therefore, the first to the fifth modifications of the first embodiment can be applied to the second embodiment without change. Thus, explanation in a case in which the first to the fifth modifications of the first embodiment are applied to the second embodiment is omitted to avoid complication.

### <Other embodiments>

In the first and the second embodiments, the Web content is converted to the print data in the image forming apparatus 100, but this is not limited to the example. For example, it is also considered that Web content is converted to print data capable of being supported by the image forming apparatus 100 on the side of the Web server that provides the Web content, and that the print data is transmitted to the image forming apparatus 100.

As one example, in the image forming apparatus 100, when the start of printing the Web content displayed on the display unit 4 is instructed through the operating unit 5, the browser unit 3 notifies a WEB site providing the Web content of the start of printing the Web content. The Web site having received the notification converts the Web content to the print data capable of being supported by the image forming apparatus and transmits the data thereto. In the image forming apparatus 100, the communication unit 1 directly transmits the print data transmitted from the Web server to the printing unit 2, where it is printed on the paper.

### <Hardware Configuration>

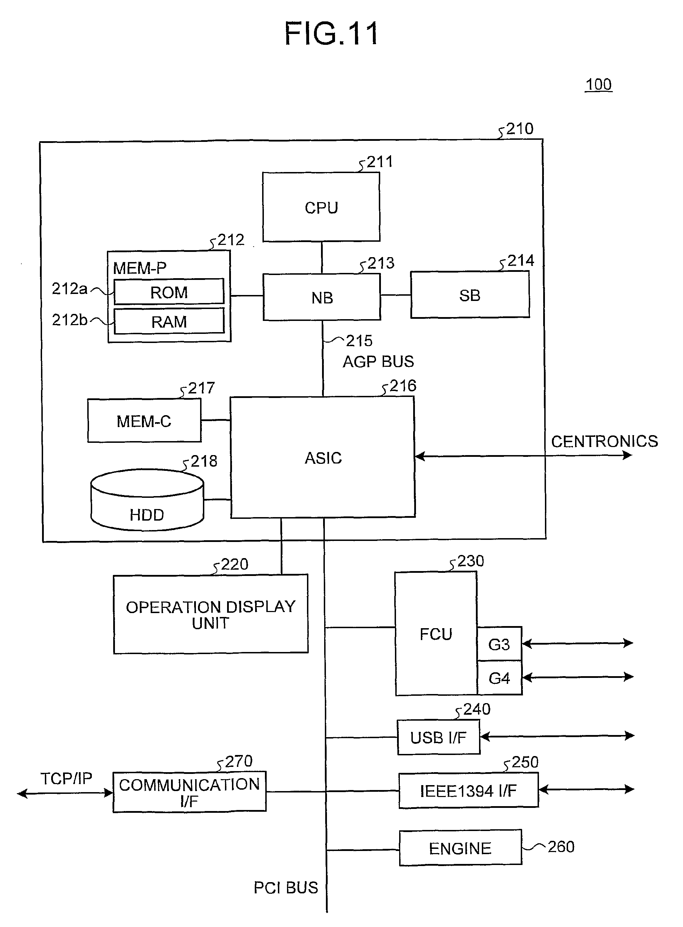

Fig. 11 represents a hardware configuration as one example of the image forming apparatus 100 capable of being commonly applied to the embodiments and the modifications according to the present invention. As shown in Fig. 11, the image forming apparatus 100 is configured in such a manner that a controller 210 and an engine unit (Engine) 260 are connected to each other by a PCI (Peripheral Component Interface) bus. The controller 210 is a controller that controls the entire image forming apparatus 100 and controls drawing, communication, and entry from an operating unit (not shown). The engine unit 260 is a printer engine or the like connectable to the PCI bus, which includes a black and white plotter, a one-drum color plotter, a four-drum color plotter, a scanner, or a fax unit, or the like. It should be noted that the engine unit 260 includes, in addition to a so-called engine portion such as the plotter, an image processing portion such as error diffusion and gamma conversion.

The controller 210 includes a CPU 211, a northbridge (NB) 213, a system memory (MEM-P) 212, a southbridge (SB) 214, a local memory (MEM-C) 217, an ASIC (Application Specific Integrated Circuit) 216, and a hard disk drive (HDD) 218, in which the northbridge (NB) 213 and the ASIC 216 are connected to each other by AGP (Accelerated Graphics Port) bus 215. The MEM-P 212 further includes a ROM (Read Only Memory) 212a and a RAM (Random Access Memory) 212b.

The CPU 211 performs controls over the image forming apparatus 100, includes a chipset composed of the NB 213, MEM-P 212, and the SB 214, and is connected to other components through the chipset.

The NB 213 is a bridge for connecting the CPU 211 to the MEM-P 212, the SB 214, and AGP 215, and includes a memory controller for controlling read/write from/to the MEM-P 212, and a PCI master and an AGP target.

The MEM-P 212 is a system memory used as a memory for storage of programs and data, a memory for expansion of programs and data, and a memory for drawing for a printer, or the like, and includes the ROM 212a and the RAM 212b. The ROM 212a is a read only memory used as the memory for storage of programs and data, and the RAM 212b is a rewritable and readable memory used as the memory for expansion of programs and data and as the memory for drawing for a printer.

The SB 214 is a bridge for connecting the NB 213 to a PCI device and a peripheral device. The SB 214 is connected to the NB 213 through the PCI bus, and a network interface (I/F) portion or the like is also connected to the PCI bus.

The ASIC 216 is an image processing specific IC (Integrated Circuit) having a hardware element for image processing, and has a role as a bridge connecting among the AGP 215, the PCI bus, the HDD 218, and the MEM-C 217. The ASIC 216 includes a PCI target and an AGP master, an arbiter (ARB) being a core of the ASIC 216, a memory controller for controlling the MEM-C 217, a plurality of DMAC (Direct Memory Access Controller) that performs rotation of image data using a hardware logic or the like, and a PCI unit that performs data transfer with the engine unit 260 through the PCI bus.

Connected to the ASIC 216 are an FCU (Facsimile Control Unit) 230, a USB (Universal Serial Bus) I/F 240, IEEE 1394 (the Institute of Electrical and Electronics Engineers 1394) I/F 250 through the PCI bus. Furthermore, a communication I/F 270 corresponding to the communication unit 1 that performs communication with an external device using TCP/IP (Transmission Control Protocol/Internet Protocol) through a network is connected to the ASIC 216 through the PCI bus. An operation display unit 220 corresponding to the operation panel 20 is directly connected to the ASIC 216.

The MEM-C 217 is a local memory used as an image buffer for copying and a sign buffer, and the HDD (Hard Disk Drive) 218 is a storage for storing image data, storing programs, storing font data, and storing forms therein.

The AGP 215 is a bus interface for graphics accelerator card proposed to highly speed up a graphic process, and by directly accessing the MEM-P 212 with high throughput, the speed of the graphics accelerator card is increased.

In such a configuration, the browser unit 3 and the print-data generating unit 6 according to the embodiments and the modifications are implemented by a program running on the CPU 211, and the program is previously stored in the ROM 212a or the HDD 218 and is provided. The CPU 211 reads the program from the ROM 212a or the HDD 218 and executes it, so that the browser unit 3 and the print-data generating unit 6 are generated on, for example, a RAM 213b.

The program for implementing the browser unit 3, the print-data generating unit 6, and the user authentication unit 7 according to the embodiments and the modifications may also be provided through a network such as the Internet or LAN. In this case, the program is received by the communication I/F 270 through the network, is stored orderly in, for example, the HDD 218, and is installed. Furthermore, the program may be provided through the USB I/F 240 and the IEEE 1394 I/F 250.

The program for implementing the print-data generating unit 6 as the plug-in according to the fifth modification of the first embodiment can also be provided in the above manner through the network. The program for the plug-in may be provided through the USB I/F 240 and the IEEE 1394 I/F 250. The program for the plug-in, when being supplied to the image forming apparatus 100, is stored orderly in the HDD 218 and installed, which then allows use of the program.

## Claims

1. An image forming apparatus (100) capable of acquiring and displaying Web content, the image forming apparatus (100) comprising:
an acquisition unit (1) configured to acquire Web content;
a display control unit configured to cause the Web content acquired by the acquisition unit (1) to be displayed on a display unit (4) according to display control information based on the Web content;
a print-data generating unit (6) configured to generate, based on the display control information for the Web content, print data for printing the Web content displayed on the display unit (4) by the display control unit in page units for printing; and
a printing unit (2) configured to print the Web content in page units according to the print data generated by the print-data generating unit (6);
**characterized in that** the display control information is bitmap data for causing the Web content to be displayed on the display unit (4),
the display control unit includes:
a generating unit configured to perform rendering based on the Web content acquired by the acquisition unit (1) to generate the bitmap data; and
a storage unit configured to store therein the bitmap data generated by the generating unit in order to be displayed on the display unit (4), and
the print-data generating unit (6) is configured to generate the print data based on the bitmap data stored in the storage unit.

2. The image forming apparatus (100) according to claim 1, wherein the print-data generating unit (6) generates the print data using the bitmap data, out of the bitmap data stored in the storage unit, in a display area of the display unit (4).

3. The image forming apparatus (100) according to claim 1, wherein the print-data generating unit (6) generates the print data using all the bitmap data stored in the storage unit.

4. The image forming apparatus (100) according to claim 1, wherein the display control information is HTML data describing the Web content, and
the print-data generating unit (6) generates the print data based on the HTML data describing the Web content acquired by the acquisition unit (1).

5. The image forming apparatus (100) according to claim 1, further comprising an operating unit (20), configured by hardware, for receiving an instruction to start printing by the printing unit (2), and
the print-data generating unit (6) generates the print data for printing the Web content in response to an operation to the operating unit (20), and outputs the print data to the printing unit (2), to cause printing of the Web content to be started.

6. The image forming apparatus (100) according to claim 1, wherein the display control unit divides the display area into a plurality of areas, causes the Web content to be displayed on a first area of divided areas, causes a user operable operator to be displayed on a second area of the divided areas, generates the print data for printing the Web content in response to an operation to the operator, and outputs the print data to the printing unit (2), to cause printing of the Web content to be started.

7. The image forming apparatus (100) according to claim 1, wherein the print-data generating unit (6) generates the print data for printing the Web content in response to an operation to an operator previously embedded in the Web content acquired by the acquisition unit (1), and outputs the print data to the printing unit (2), to cause printing of the Web content to be started.

8. The image forming apparatus (100) according to claim 1, wherein the printing unit (2) adjusts a print size of the Web content to be printed in accordance with the print data, according to setting of a paper used for printing.

9. The image forming apparatus (100) according to claim 1, wherein
the display control unit causes a setting screen, on which print setting for printing performed by the printing unit (2) in accordance with the print data is performed, to be displayed on the display unit (4), and
the printing unit (2) prints the Web content in accordance with the print setting performed on the setting screen displayed by the display control unit.

10. The image forming apparatus (100) according to claim 1, further comprising an authentication unit (7) that performs user authentication and, when authentication is allowed, permits to print the Web content using the printing unit (2).

11. The image forming apparatus (100) according to claim 1, wherein at least the print-data generating unit (6) is added as plug-in, so that the image forming apparatus (100) is allowed to be used.

12. The image forming apparatus (100) according to claim 11, wherein the display control unit, when the plug-in is added, causes a setting screen, on which print setting for printing performed by the printing unit (2) in accordance with the print data containing at least an operator for instructing the start of printing the Web content is performed, to be displayed on the display unit (4).

13. An image forming method comprising:
acquiring Web content;
causing the Web content acquired at the acquiring to be displayed on a display unit (4) according to display control information based on the Web content;
generating, based on the display control information for the Web content, print data for printing the Web content displayed on the display unit (4) at the causing in page units for printing; and
printing the Web content in page units according to the print data generated at the generating;
**characterized by**:
the display control information is bitmap data for causing the Web content to be displayed on the display unit (4);
the causing includes:
performing rendering based on the Web content acquired at the acquiring to generate the bitmap; and
storing the bitmap data generated at the generating in order to be displayed on the display unit (4); and
generating the print data based on the bitmap data stored at the storing, at the generating.

14. A program that causes a computer to execute:
acquiring Web content;
causing the Web content acquired at the acquiring to be displayed on a display unit (4) according to display control information based on the Web content;
generating, based on the display control information for the Web content, print data for printing the Web content displayed on the display unit (4) at the causing in page units for printing; and
printing the Web content in page units according to the print data generated at the generating;
**characterized by**:
the display control information is bitmap data for causing the Web content to be displayed on the display unit (4);
the causing includes:
performing rendering based on the Web content acquired at the acquiring to generate the bitmap; and
storing the bitmap data generated at the generating in order to be displayed on the display unit (4); and
generating the print data based on the bitmap data stored at the storing, at the generating.

## Patentansprüche

1. Bilderzeugungsvorrichtung (100), die Web-Inhalt erfassen und anzeigen kann, wobei die Bilderzeugungsvorrichtung (100) umfasst:
eine Erfassungseinheit (1), die konfiguriert ist, Web-Inhalt zu erfassen;
eine Anzeigesteuereinheit, die konfiguriert ist, zu bewirken, dass der durch die Erfassungseinheit (1) erfasste Web-Inhalt auf einer Anzeigeeinheit (4) gemäß Anzeigesteuerinformationen, die auf dem Web-Inhalt beruhen, angezeigt wird;
eine Druckdatenerzeugungseinheit (6), die konfiguriert ist, anhand der Anzeigesteuerinformationen für den Web-Inhalt Druckdaten für das Drucken des durch die Anzeigesteuereinheit auf der Anzeigeeinheit (4) angezeigten Web-Inhalts in Seiteneinheiten für das Drucken zu erzeugen; und
eine Druckeinheit (2), die konfiguriert ist, den Web-Inhalt in Seiteneinheiten gemäß den durch die Druckdatenerzeugungseinheit (6) erzeugten Druckdaten zu drucken;
**dadurch gekennzeichnet, dass**
die Anzeigesteuerinformationen Bitmap-Daten zum Bewirken, dass der WebInhalt auf der Anzeigeeinheit (4) angezeigt wird, sind,
wobei die Anzeigesteuereinheit enthält:
eine Erzeugungseinheit, die konfiguriert ist, eine Wiedergabe anhand des durch die Erfassungseinheit (1) erfassten Web-Inhalts auszuführen, um die Bitmap-Daten zu erzeugen; und
eine Speichereinheit, die konfiguriert ist, in ihr die durch die Erzeugungseinheit erzeugten Bitmap-Daten zu speichern, um sie auf der Anzeigeeinheit (4) anzuzeigen, und
die Druckdatenerzeugungseinheit (6) konfiguriert ist, die Druckdaten anhand der in der Speichereinheit gespeicherten Druckdaten zu erzeugen.

2. Bilderzeugungsvorrichtung (100) nach Anspruch 1, wobei die Druckdatenerzeugungseinheit (6) die Druckdaten unter Verwendung der Bitmap-Daten aus den in der Speichereinheit gespeicherten Bitmap-Daten in einem Anzeigebereich der Anzeigeeinheit (4) erzeugt.

3. Bilderzeugungsvorrichtung (100) nach Anspruch 1, wobei die Druckdatenerzeugungseinheit (6) die Druckdaten unter Verwendung aller in der Speichereinheit gespeicherten Bitmap-Daten erzeugt.

4. Bilderzeugungsvorrichtung (100) nach Anspruch 1, wobei die Anzeigesteuerinformationen HTML-Daten sind, die den Web-Inhalt beschreiben, und
die Druckdatenerzeugungseinheit (6) die Druckdaten anhand der HTML-Daten, die den durch die Erfassungseinheit (1) erfassten Web-Inhalt beschreiben, erzeugt.

5. Bilderzeugungsvorrichtung (100) nach Anspruch 1, die ferner eine Bedienungseinheit (20) umfasst, die durch Hardware konfiguriert ist, eine Anweisung zu empfangen, das Drucken durch die Druckeinheit (2) zu starten, und
die Druckdatenerzeugungseinheit (6) die Druckdaten für das Drucken des Web-Inhalts als Reaktion auf eine Bedienung der Bedienungseinheit (20) erzeugt und die Druckdaten an die Druckeinheit (2) ausgibt, um zu bewirken, dass das Drucken des Web-Inhalts gestartet wird.

6. Bilderzeugungsvorrichtung (100) nach Anspruch 1, wobei die Anzeigesteuereinheit den Anzeigebereich in mehrere Bereiche unterteilt, bewirkt, dass der Web-Inhalt in einem ersten Bereich der unterteilten Bereiche angezeigt wird, bewirkt, dass ein durch einen Anwender bedienbarer Operator in einem zweiten Bereich der unterteilten Bereiche angezeigt wird, die Druckdaten für das Drucken des Web-Inhalts als Reaktion auf eine Bedienung des Operator erzeugt und die Druckdaten an die Druckeinheit (2) ausgibt, um zu bewirken, dass das Drucken des Web-Inhalts gestartet wird.

7. Bilderzeugungsvorrichtung (100) nach Anspruch 1, wobei die Druckdatenerzeugungseinheit (6) die Druckdaten für das Drucken des Web-Inhalts als Reaktion auf eine Bedienung eines Operators, der vorher in den durch die Erfassungseinheit (1) erfassten Web-Inhalt eingebettet war, erzeugt und die Druckdaten an die Druckeinheit (2) ausgibt, um zu bewirken, dass das Drucken des Web-Inhalts gestartet wird.

8. Bilderzeugungsvorrichtung (100) nach Anspruch 1, wobei die Druckeinheit (2) eine Druckgröße des gemäß der Druckdaten zu druckenden Web-Inhalts gemäß einer Einstellung des für das Drucken verwendeten Papiers anpasst.

9. Bilderzeugungsvorrichtung (100) nach Anspruch 1, wobei
die Anzeigesteuereinheit bewirkt, dass ein Einstellungsbildschirm, auf dem die Druckeinstellung für das durch die Druckeinheit (2) gemäß der Druckdaten ausgeführte Drucken ausgeführt wird, auf der Anzeigeeinheit (4) angezeigt wird und
die Druckeinheit (2) den Web-Inhalt gemäß der auf dem durch die Anzeigesteuereinheit angezeigten Einstellungsbildschirm ausgeführten Druckeinstellung druckt.

10. Bilderzeugungsvorrichtung (100) nach Anspruch 1, die ferner eine Authentifizierungseinheit (7) umfasst, die eine Anwenderauthentifizierung ausführt und dann, wenn die Authentifizierung genehmigt ist, erlaubt, den Web-Inhalt unter Verwendung der Druckeinheit (2) zu drucken.

11. Bilderzeugungsvorrichtung (100) nach Anspruch 1, wobei zumindest die Druckdatenerzeugungseinheit (6) als ein Plugin hinzugefügt ist, so dass es erlaubt ist, die Bilderzeugungsvorrichtung (100) zu benutzen.

12. Bilderzeugungsvorrichtung (100) nach Anspruch 11, wobei die Anzeigesteuereinheit, dann wenn das Plugin hinzugefügt ist, bewirkt, dass ein Einstellungsbildschirm, auf dem eine Druckeinstellung für das durch die Druckeinheit (2) gemäß der Druckdaten ausgeführte Drucken, die zumindest einen Operator zum Anweisen des Starts des Druckens des Web-Inhalts enthält, ausgeführt wird, auf der Anzeigeeinheit (4) angezeigt wird.

13. Bilderzeugungsverfahren, das umfasst:
Erfassen eines Web-Inhalts;
Bewirken, dass der bei dem Erfassen erfasste Web-Inhalt gemäß Anzeigesteuerinformationen, die auf dem Web-Inhalt beruhen, auf einer Anzeigeeinheit (4) angezeigt wird;
Erzeugen von Druckdaten für das Drucken des auf der Anzeigeeinheit (4) angezeigten Web-Inhalts anhand der Anzeigesteuerinformationen für den Web-Inhalt bei dem Bewirken in Seiteneinheiten für das Drucken; und
Drucken des Web-Inhalts in Seiteneinheiten gemäß der bei dem Erzeugen erzeugten Druckdaten;
**gekennzeichnet durch**:
die Anzeigesteuerinformationen sind Bitmap-Daten, um zu bewirken, dass der Web-Inhalt auf der Anzeigeeinheit (4) angezeigt wird;
das Bewirken enthält:
Ausführen einer Wiedergabe anhand des bei dem Erfassen erfassten Web-Inhalts, um die Bitmap zu erzeugen; und
Speichern der bei dem Erzeugen erzeugten Bitmap-Daten, um auf der Anzeigeeinheit (4) angezeigt zu werden; und
Erzeugen der Druckdaten anhand der bei dem Speichern gespeicherten Druckdaten bei dem Erzeugen.

14. Programm, dass bewirkt, dass ein Computer ausführt:
Erfassen eines Web-Inhalts;
Bewirken, dass der bei dem Erfassen erfasste Web-Inhalt auf einer Anzeigeeinheit (4) gemäß Anzeigesteuerinformationen, die auf dem Web-Inhalt beruhen, angezeigt wird;
Erzeugen von Druckdaten für das Drucken des auf der Anzeigeeinheit (4) angezeigten Web-Inhalts anhand der Anzeigesteuerinformationen für den Web-Inhalt bei dem Bewirken in Seiteneinheiten für das Drucken; und
Drucken des Web-Inhalts in Seiteneinheiten gemäß der bei dem Erzeugen erzeugten Druckdaten;
**gekennzeichnet durch**:
die Anzeigesteuerinformation sind Bitmap-Daten, um zu bewirken, dass der Web-Inhalt auf der Anzeigeeinheit (4) angezeigt wird;
das Bewirken enthält:
Ausführen einer Wiedergabe anhand des bei dem Erfassen erfassten Web-Inhalts, um die Bitmap zu erzeugen; und
Speichern der bei dem Erzeugen erzeugten Bitmap-Daten, um auf der Anzeigeeinheit (4) angezeigt zu werden; und
Erzeugen der Druckdaten anhand der bei dem Speichern gespeicherten Bitmap-Daten bei dem Erzeugen.

## Revendications

1. Appareil de formation d'image (100) capable d'acquérir et d'afficher un contenu Web, l'appareil de formation d'image (100) comprenant :
une unité d'acquisition (1) configurée pour acquérir un contenu Web ;
une unité de commande d'affichage configurée pour provoquer l'affichage du contenu Web acquis par l'unité d'acquisition (1) sur une unité d'affichage (4) conformément à des informations de commande d'affichage basées sur le contenu Web ;
une unité de génération de données d'impression (6) configurée pour générer, sur la base des informations de commande d'affichage pour le contenu Web, des données d'impression pour imprimer le contenu Web affiché sur l'unité d'affichage (4) par l'unité de commande d'affichage dans des unités de page pour une impression ; et
une unité d'impression (2) configurée pour imprimer le contenu Web dans des unités de page conformément aux données d'impression générées par l'unité de génération de données d'impression (6) ;
**caractérisé en ce que**
les informations de commande d'affichage sont des données de bitmap pour provoquer l'affichage du contenu Web sur l'unité d'affichage (4),
l'unité de commande d'affichage comprend :
une unité de génération configurée pour effectuer le rendu sur la base du contenu Web acquis par l'unité d'acquisition (1) pour générer les données de bitmap ; et
une unité de mémorisation configurée pour mémoriser dans celle-ci les données de bitmap générées par l'unité de génération afin qu'elles soient affichées sur l'unité d'affichage (4), et
l'unité de génération de données d'impression (6) est configurée pour générer les données d'impression sur la base des données de bitmap mémorisées dans l'unité de mémorisation.

2. Appareil de formation d'image (100) selon la revendication 1, dans lequel l'unité de génération de données d'impression (6) génère les données d'impression en utilisant les données de bitmap, parmi les données de bitmap mémorisées dans l'unité de mémorisation, dans une zone d'affichage de l'unité d'affichage (4).

3. Appareil de formation d'image (100) selon la revendication 1, dans lequel l'unité de génération de données d'impression (6) génère les données d'impression en utilisant toutes les données de bitmap mémorisées dans l'unité de mémorisation.

4. Appareil de formation d'image (100) selon la revendication 1, dans lequel les informations de commande d'affichage sont des données HTML décrivant le contenu Web, et
l'unité de génération de données d'impression (6) génère les données d'impression sur la base des données HTML décrivant le contenu Web acquises par l'unité d'acquisition (1).

5. Appareil de formation d'image (100) selon la revendication 1, comprenant en outre une unité d'opération (20), configurée par un matériel, pour recevoir une instruction pour débuter l'impression par l'unité d'impression (2), et
l'unité de génération de données d'impression (6) génère les données d'impression pour imprimer le contenu Web en réponse à une opération appliquée à l'unité d'opération (20), et délivre les données d'impression à l'unité d'impression (2), pour provoquer le commencement de l'impression du contenu Web.

6. Appareil de formation d'image (100) selon la revendication 1, dans lequel l'unité de commande d'affichage divise la zone d'affichage en une pluralité de zones, provoque l'affichage du contenu Web dans une première zone parmi les zones divisées, provoque l'affichage d'un opérateur pouvant être utilisé par un utilisateur dans une deuxième zone parmi les zones divisées, génère les données d'impression pour imprimer le contenu Web en réponse à une opération appliquée à l'opérateur, et délivre les données d'impression à l'unité d'impression (2), pour provoquer le commencement de l'impression du contenu Web.

7. Appareil de formation d'image (100) selon la revendication 1, dans lequel l'unité de génération de données d'impression (6) génère les données d'impression pour imprimer le contenu Web en réponse à une opération appliquée à un opérateur précédemment intégré dans le contenu Web acquis par l'unité d'acquisition (1), et délivre les données d'impression à l'unité d'impression (2), pour provoquer le commencement de l'impression du contenu Web.

8. Appareil de formation d'image (100) selon la revendication 1, dans lequel l'unité d'impression (2) ajuste un format d'impression du contenu Web à imprimer conformément aux données d'impression, conformément à la configuration d'un papier utilisé pour l'impression.

9. Appareil de formation d'image (100) selon la revendication 1, dans lequel
l'unité de commande d'affichage provoque l'affichage d'un écran de configuration, sur lequel la configuration d'impression pour l'impression effectuée par l'unité d'impression (2) conformément aux données d'impression est effectuée, sur l'unité d'affichage (4), et
l'unité d'impression (2) imprime le contenu Web conformément à la configuration d'impression effectuée sur l'écran de configuration affiché par l'unité de commande d'affichage.

10. Appareil de formation d'image (100) selon la revendication 1, comprenant en outre une unité d'authentification (7) qui effectue une authentification d'utilisateur et, lorsqu'une authentification est valide, permet l'impression du contenu Web en utilisant l'unité d'impression (2).

11. Appareil de formation d'image (100) selon la revendication 1, dans lequel au moins l'unité de génération de données d'impression (6) est ajoutée en tant que module d'extension, de sorte que l'appareil de formation d'image (100) puisse être utilisé.

12. Appareil de formation d'image (100) selon la revendication 11, dans lequel l'unité de commande d'affichage, lorsque le module d'extension est ajouté, provoque l'affichage d'un écran de configuration, sur lequel une configuration d'impression pour l'impression effectuée par l'unité d'impression (2) conformément aux données d'impression contenant au moins un opérateur pour ordonner le commencement de l'impression du contenu Web est effectuée, sur l'unité d'affichage (4).

13. Procédé de formation d'image comprenant :
l'acquisition d'un contenu Web ;
l'affichage du contenu Web acquis au moment de l'acquisition sur une unité d'affichage (4) conformément à des informations de commande d'affichage basées sur le contenu Web ;
la génération, sur la base des informations de commande d'affichage pour le contenu Web, de données d'impression pour imprimer le contenu Web affiché sur l'unité d'affichage (4) au moment de l'affichage dans des unités de page pour une impression ; et
l'impression du contenu Web dans des unités de page conformément aux données d'impression générées au moment de la génération ;
**caractérisé en ce que** :
les informations de commande d'affichage sont des données de bitmap pour provoquer l'affichage du contenu Web sur l'unité d'affichage (4) ;
l'affichage comprend :
l'exécution du rendu sur la base du contenu Web acquis au moment de l'acquisition pour générer le bitmap ; et
la mémorisation des données de bitmap générées au moment de la génération afin qu'elles soient affichées sur l'unité d'affichage (4) ; et
la génération des données d'impression sur la base des données de bitmap mémorisées au moment de la mémorisation, au moment de la génération.

14. Programme qui amène un ordinateur à effectuer :
l'acquisition d'un contenu Web ;
l'affichage du contenu Web acquis au moment de l'acquisition sur une unité d'affichage (4) conformément à des informations de commande d'affichage basées sur contenu Web ;
la génération, sur la base des informations de commande d'affichage pour le contenu Web, de données d'impression pour imprimer le contenu Web affiché sur l'unité d'affichage (4) au moment de l'affichage dans des unités de page pour l'impression ; et
l'impression du contenu Web dans des unités de page conformément aux données d'impression générées au moment de la génération ;
**caractérisé en ce que** :
les informations de commande d'affichage sont des données de bitmap pour provoquer l'affichage du contenu Web sur l'unité d'affichage (4) ;
l'affichage comprend :
l'exécution du rendu sur la base du contenu Web acquis au moment de l'acquisition pour générer le bitmap ; et
la mémorisation des données de bitmap générées au moment de la génération afin qu'elles soient affichées sur l'unité d'affichage (4) ; et
la génération des données d'impression sur la base des données de bitmap mémorisées au moment de la mémorisation, au moment de la génération.
